Europäisches Patentamt

European Patent Office

Office européen des brevets

(11) Numéro de publication: **0 010 493**

**A1**

## (12) DEMANDE DE BREVET EUROPEEN

(21) Numéro de dépôt: **79400746.8**

(22) Date de dépôt: **15.10.79**

(51) Int. Cl.³: **G 01 B 11/00**
**G 01 B 21/00, G 01 D 5/34**

(30) Priorité: 16.10.78 FR 7829365

(43) Date de publication de la demande:
30.04.80 Bulletin 80/9

(84) Etats Contractants Désignés:
CH DE GB IT NL SE

(71) Demandeur: MICROLEC S.A.
4, route de Beaumont
CH-1701 Fribourg(CH)

(72) Inventeur: Delmas, Jean Raymond
1, rue Falret
F-92170 Vanves(FR)

(74) Mandataire: Martinet, René et al,
Cabinet Martinet 62, rue des Mathurins
F-75008 Paris(FR)

(54) **Dispositif optoélectronique de mesure dimensionnelle de haute précision.**

(57) Dispositif optoélectronique de mesure de dimensions et de déplacements comprenant un corps (101) une tige mobile de palpeur (105) dont on veut mesurer les déplacements, ladite tige coulissant dans ledit corps grâce à deux paliers portés par celui-ci, une touche de contact (106) à l'extrémité de la tige, une source de lumière (112) et deux photorécepteurs (1,2) contigus solidaires du corps et positionnés symétriquement de part et d'autre de la tige, un cache (109) porté par la tige et situé entre la source et les photorécepteurs et ayant des parties transparentes et opaques, le mouvement du cache ayant pour effet d'augmenter et de diminuer respectivement les surfaces sensibles exposées à la source de lumière des deux photorécepteurs. Le dispositif est caractérisé en ce que le cache est substantiellement symétrique de la touche de contact par rapport au point milieu entre les deux paliers, d'où il résulte que le jeu mécanique de la tige dans ses paliers de guidage n'entraîne qu'une variation nulle ou négligeable de la différence des éclairements des photorécepteurs.

La présente invention concerne un capteur optoélectronique de déplacement de haute précision et plus particulièrement un capteur de ce genre utilisant des photorécepteurs à action différentielle.

On connaît déjà des capteurs optoélectroniques du genre indiqué pour la mesure des tolérances d'usinage et pour la mesure des déplacements.

La demande de brevet américain No 937.688 du 28 Août 1978 au nom de la présente demanderesse a décrit un appareil pour détecter si une dimension mesurée s'écarte ou non d'une valeur nominale par un incrément prédéterminé . Cet appareil comprend une tige de palpeur pour suivre la surface d'une pièce mécanique, une fenêtre de surface variable dont la surface est commandée par la tige de palpeur, deux paires de récepteurs photoélectriques, les récepteurs de chaque paire recueillant d'une source de lumière, une illumination différentielle à travers ladite fenêtre et un circuit électronique formé de trois bascules. La première bascule est actionnée quand l'illumination différentielle d'une certaine paire de photorécepteurs dépasse une valeur prédéterminée positive ; la seconde bascule est actionnée quand l'illumination différentielle d'une seconde paire de photorécepteurs dépasse une valeur prédéterminée négative et la troisième bascule est actionnée quand ni la première bascule ni la seconde ne sont elles-mêmes actionnées ce qui traduit que la dimension testée est à l'intérieur de limites nominales.

Un tel appareil est conçu pour mesurer des tolérances mais non des dimensions avec la haute précision requise.

Des appareils optoélectroniques de mesure d'une dimension ou d'un déplacement sont décrits dans le brevet français N° 2 300 367 du 7 Février 1975 et dans le brevet d'addition français N° 2 340 574 du 26 Juillet 1976 tous deux au nom de l'actuelle demanderesse. Dans ces brevets on utilise une paire de photorécepteurs dont la surface sensible est délimitée par un contour carré ou rectangulaire (matérialisé par un cache fixe dans le cas où les photorécepteurs sont équipés d'une optique ronde de focalisation). Les photorécepteurs sont montés en série entre deux lignes d'alimentation électrique en ayant une électrode commune. La mesure d'une variation de tension sur l'électrode commune due à un déplacement d'un cache mobile lié à la tige d'un palpeur qui masque partiellement chaque photorécepteur , est obtenue à l'aide d'un indicateur électrique ou à afficheur digital.

Un tel montage est utilisable pour effectuer des mesures dimensionnelles. Dans ce cas, des sources de lumière sont associées à chacun des deux photorécepteurs qui sont éloignés l'un de l'autre en étant situé d'un même côté par rapport à la tige mobile du palpeur et de part et d'autre d'un masque en forme de barre lié à la tige mobile, masque qui les recouvre l'un et l'autre partiellement en interceptant la lumière émise par lesdites sources, de telle sorte que lorsque l'éclairement d'un photorécepteur

3 0010493

diminue, celui de l'autre augmente.

Ce montage de l'art antérieur a un encombrement relativement important en raison de l'éloignement des deux photorécepteurs l'un par rapport à l'autre et de leur distance par rapport à la tige mobile du palpeur, ce qui conduit à employer deux sources de lumière séparées, une par photorécepteur. Il faut donc donner la même luminance aux deux sources ce qui est difficile.

De plus, ce montage de l'art antérieur ne permet pas d'atteindre un haut degré de précision, de l'ordre de $0,1 \mu m$ sur une dimension de 1 mm ce que permet d'atteindre l'appareil de l'invention. Le jeu mécanique latéral inévitable de la tige du palpeur dans ses fourreaux de guidage entraine des variations inégales des quantités de lumière reçues par les photorécepteurs, variations dont la différence ne s'annule pas exactement quand on forme l'illumination différentielle du couple de photorécepteurs aux bornes desquels on soustrait les signaux.

L'invention va être maintenant décrite en détail en relation avec les dessins annexés dans lesquels :
- les figures 1A, 1B et 1C sont des schémas explicatifs de l'erreur introduite sur une mesure dimensionnelle faite avec un appareil de l'art antérieur en cas d'inclinaison de la tige du palpeur ;
- les figures 2A et AB sont des schémas explicatifs montrant comment la disposition respective des photorécepteurs et du cache permet d'éviter toute erreur de mesure due au jeu mécanique latéral de la tige mobile ;
- les figures 3A et 3B montrent la forme du cache et la disposition respective des photorécepteurs et du cache ;
- les figure 4 et 5 sont respectivement une vue de côté du capteur, coquilles du boîtier écartées et une vue de face du capteur, l'une des coquilles du boîtier restant en place ;

- la figure 6 est une vue éclatée du capteur de l'invention ; et

- la figure 7 est un diagramme électrique de l'amplificateur du capteur.

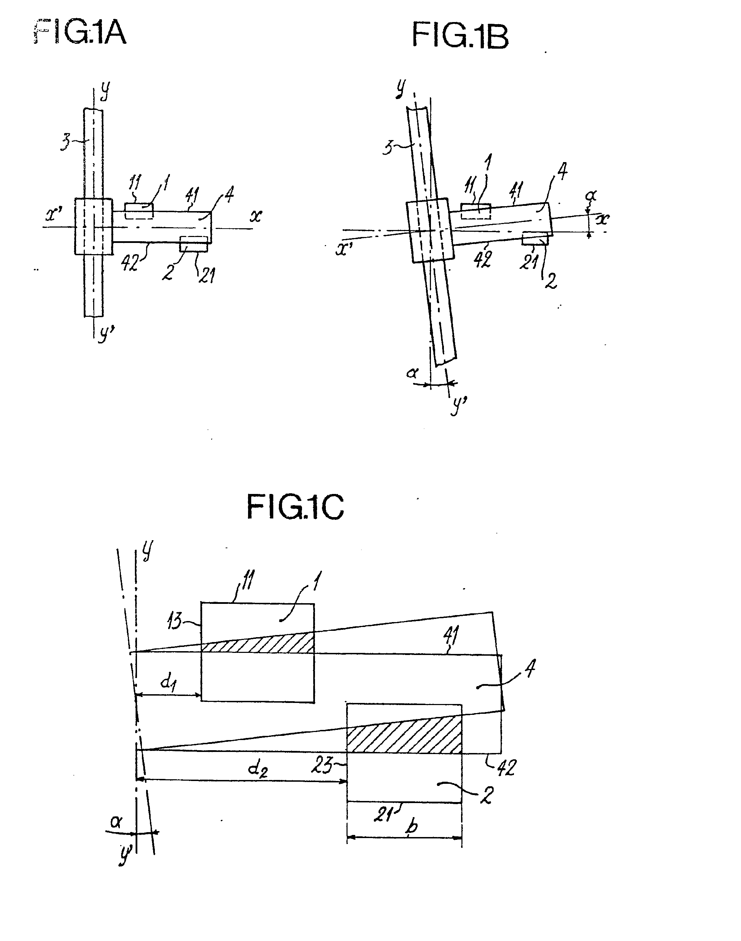

Sur les figure 1A et 1B, on a représenté la tige du palpeur 3, son axe y - y', le cache mobile 4, son axe x - x', et les photorécepteurs 1 et 2. Sur la figure 1A, la tige a sa position normale dans laquelle les côtés 41 et 42 du cache 4 sont parallèles aux côtés 11 et 21 des photorécepteurs 1 et 2. Dans la figure 1B, la tige 3 du palpeur est inclinée d'un angle $\alpha$ par rapport à sa position normale. Il en résulte que les côtés 41 et 42 du cache 4 sont inclinés d'un angle $\alpha$ par rapport aux côtés 11 et 21 des photorécepteurs 1 et 2.

Si (figure 1C) $d_1$ et $d_2$ sont les distances des côtés internes des photorécepteurs 1 et 2 à l'axe de la tige et b la largeur des photorécepteurs, on voit que les parties/respectivement occultée sur le photorécepteur 1 et découverte sur le photorécepteur 2 à la suite d'une inclinaison $\alpha$ de l'axe, ont pour surfaces en première approximation :

$$(d_1 + \frac{b}{2})b \; tg \, \alpha \quad \text{et} \quad (d_2 + \frac{b}{2})b \; tg \, \alpha$$

Si $d_1 \neq d_2$ ces surfaces ne sont pas égales. Il en résulte que la tension sur l'électrode commune des deux photorécepteurs dépend en partie du jeu mécanique latéral de la tige mobile, ce qui peut entraîner une erreur de mesure.

Dans la demande les photorécepteurs sont situés de part et d'autre de l'axe de la tige tout en étant très rapprochés.

5

Soit O le centre de rotation autour duquel tourne la tige à cause de son jeu dans ses paliers ; le point O est le point de l'axe de la tige situé à égale distance des paliers et soit C le point où l'axe de symétrie du masque 4 perpendiculaire à l'axe de la tige coupe cet axe. La distance OC est désignée par $\ell$.

Les photorécepteurs 1 et 2 ont leurs côtés internes 13 et 23 à la distance d de l'axe y - y' de la tige de part et d'autre de ce dernier. Prenant comme axe de coordonnées deux axes rectangulaires passant par O, l'axe Oy étant dirigé selon l'axe de la tige, l'axe de symétrie D du cache a pour équation

$$y = \ell$$

et coupe les côtés x = ± d en deux points $A_1(d, \ell)$ et $A_2(-d, \ell)$.

Si l'axe prend une inclinaison $\alpha$, le point C subit une rotation et passe du point $C(0, \ell)$ au point $C'(-\ell \sin\alpha, \ell \cos\alpha)$. L'axe de symétrie D' du masque a pour équation :

$$-\frac{x}{\ell} \sin\alpha + \frac{y}{\ell} \cos\alpha - 1 = 0 \qquad (1)$$

Cette droite ne passe pas par le point C et coupe les droites x = ± d en $B_1$ et $B_2$ de coordonnées respectives :

$$x_{B1} = + d \qquad\qquad x_{B2} = -d$$
$$y_{B1} = \frac{\ell}{\cos\alpha} + d \, tg\alpha \qquad y_{B2} = \frac{\ell}{\cos\alpha} - d \, tg\alpha$$

Les points $B_1$ et $B_2$ ne sont pas symétriques par rapport à C et les segments $A_1 B_1$ et $A_2 B_2$ ne sont pas égaux.

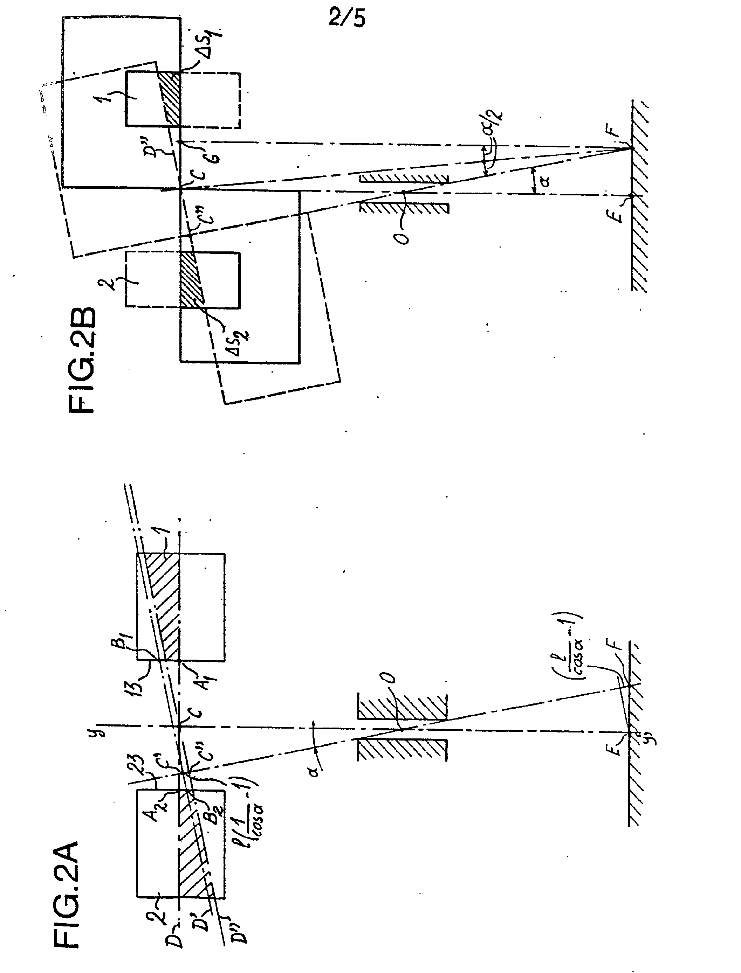

On remarque sur la figure 2A que la tige 3 quand elle a l'obliquité $\alpha$ touche la pièce en F et non en E. Elle glisse donc de la quantité $\ell(\frac{1}{\cos\alpha} - 1)$. La droite D' vient en D" telle que l'écart C' C" vaille $\ell(\frac{1}{\cos\alpha} - 1)$. L'équation de la droite D" est

$$\frac{x}{p} + \frac{y}{q} - 1 = -\frac{x \sin\alpha \cos\alpha}{\ell(2\cos\alpha - 1)} + \frac{y \cos^2\alpha}{\ell(2\cos\alpha - 1)} - 1 = 0 \qquad (2)$$

d'où

$$p = -\frac{\ell(2\cos\alpha - 1)}{\sin\alpha\cos\alpha} \qquad q = \frac{\ell(2\cos\alpha - 1)}{\cos^2\alpha}$$

et la distance de O à la droite D'' est

$$\delta = p\sin\alpha = q\cos\alpha = \frac{\ell(2\cos\alpha - 1)}{\cos\alpha}$$

qui tend vers $\ell$ quand $\alpha$ tend vers zéro.

Cette droite passe par le point C qui est le centre de symétrie des photorécepteurs et délimite sur chacun d'eux des incrément et décrément égaux. Si $\alpha$ est pris comme infiniment petit du 1er ordre, $(\delta - \ell)$ est un infiniment petit en $\alpha^2$. On voit donc que si le centre de symétrie C des photorécepteurs est le symétrique de la touche de contact par rapport au point O équidistant des deux fourreaux ou des deux paliers, une inclinaison de la tige due au jeu de celle-ci est sans effet sur l'exactitude de la mesure.

La figure 2B donne une explication géométrique de la condition à remplir pour qu'une inclinaison de la tige mobile du capteur due à un jeu mécanique soit sans effet sur la différence des éclairements des deux photorécepteurs.

Soit C le centre de symétrie de l'ensemble des deux photorécepteurs.

En position milieu du cache mobile associé à la tige mobile perpendiculaire à la surface à contrôler, la ligne D de masquage passe par C.

Une inclinaison $\alpha$ de la tige mobile par rapport au point O milieu de la longueur hors tout des fourreaux de guidage, peut engendrer une différence non nulle, entre les variations conséquentes $\Delta S_1$ et $\Delta S_2$ des srufaces éclairées, si la nouvelle position D' de la ligne de masquage ne passe pas précisément par le point C.

Pour que les variations $\Delta S_1$ et $\Delta S_2$ soient égales, il est
nécessaire que l'on ait :

$$C\ C'' = C\ G \qquad\qquad C\ C'' \text{ et } C\ G$$

étant respectivement perpendiculaires à C" F et C E.

Le point C doit donc être situé sur la bissectrice de l'angle
$\widehat{C''\ F\ G}$ égal à l'angle d'inclinaison $\alpha$ de la tige mobile. Ayant :

$$C''\ C = O\ C\ \sin\alpha \quad \text{et} \quad C\ G = E\ F = E\ C\ tg\,\alpha/2$$

la condition $C\ C'' = C\ G$ implique que

$$\frac{OC}{EC} = \frac{tg\,\alpha/2}{\sin\alpha}$$

Pour une faible valeur de $\alpha$

$$\frac{OC}{EC} = \frac{tg\,\alpha/2}{\sin\alpha} \simeq 1/2$$

Le point C est donc le symétrique du point E par rapport au
point O.

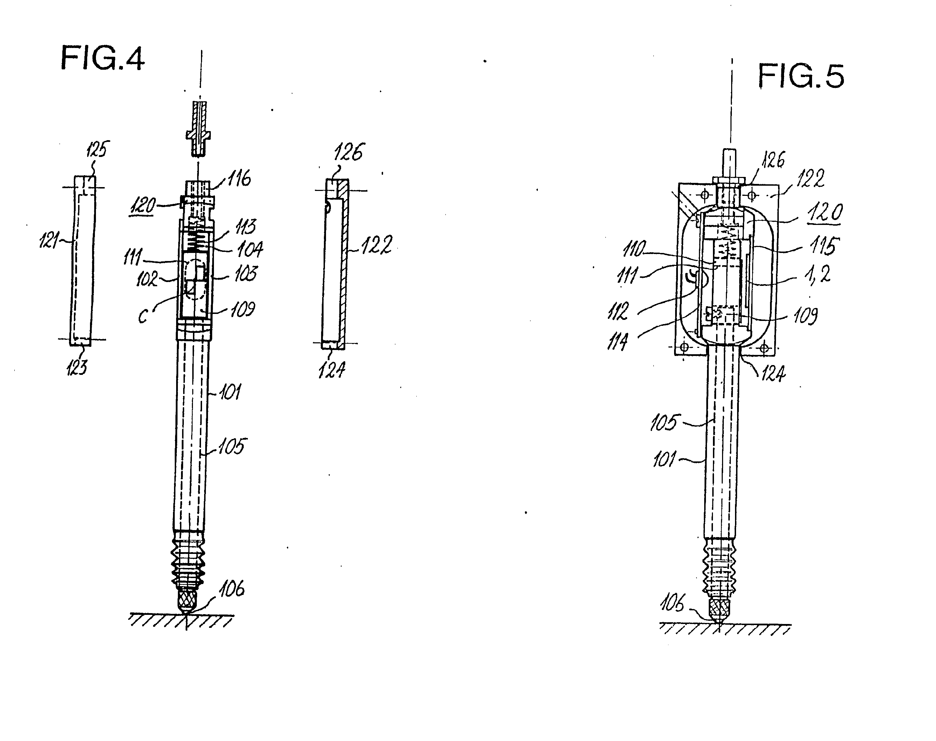

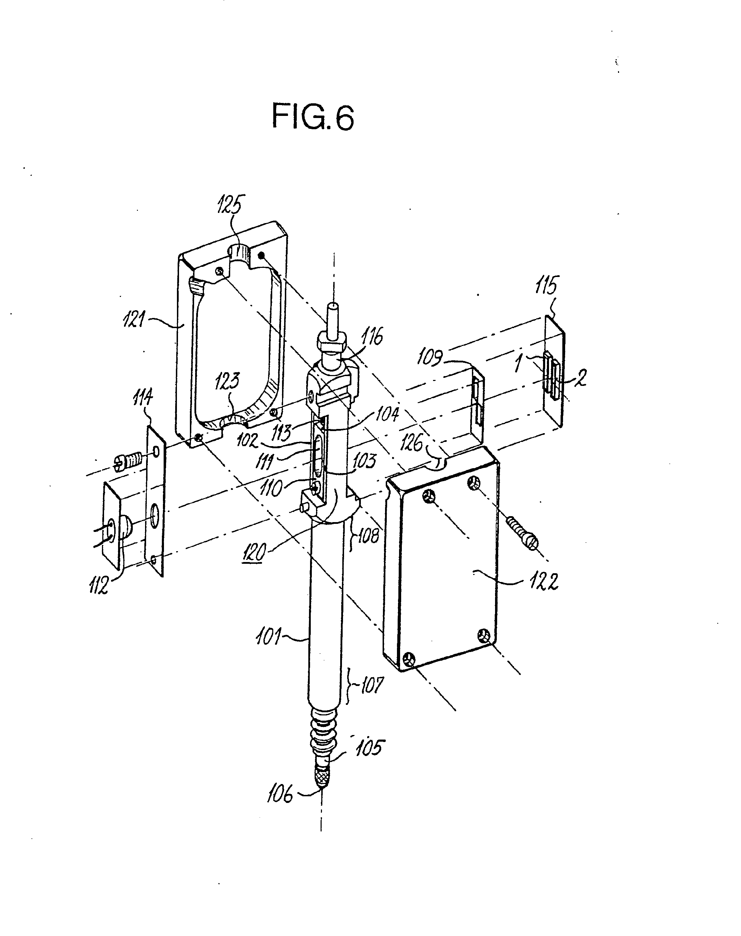

Les figures 4 et 5 représentent un capteur optoélectronique
de déplacements conforme à l'invention.

Il comprend un corps ayant une partie basse cylindrique tubulaire 101 qui sert à la fixation du capteur sur un support
non représenté et une partie haute 120 formée de deux plaques
parallèles 102 et 103 délimitant un logement à deux faces
opposées planes 104. Dans le corps cylindrique peut coulisser
une tige mobile 105 terminée par une touche de contact 106 et
guidée par deux fourreaux 107 et 108 intérieurs au corps 101.
Conformément aux explications données en relation avec les
figures 2A et 2B, le centre du logement 104 est substantiellement symétrique de la touche 106 par rapport au point situé à
égale distance des deux fourreaux

107 et 108. Une sortie tubulaire 116 permet, par application d'une dépression d'air, de relever la tige mobile 105. Dans le logement 104, on trouve les éléments suivants

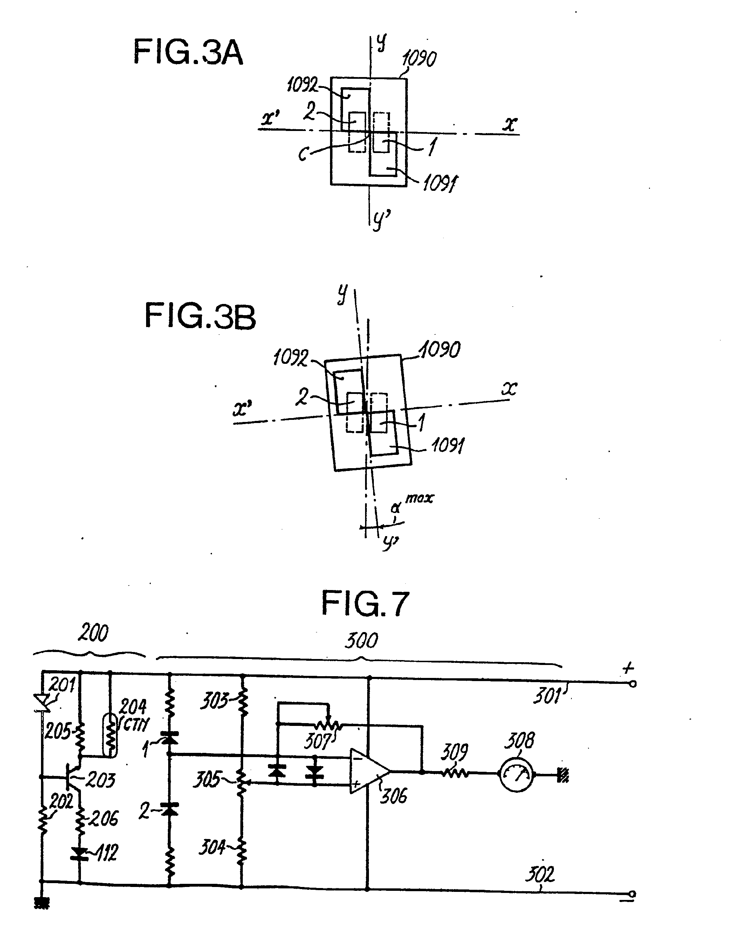

- la cache mobile 109 dans le plan de la figure 4 et perpendiculaire au plan de la figure 5 qui est par exemple constitué d'un cliché photographique ou de parties métalliques opaques à la lumière correspondant au dessin des figures 3A et 3B ;

- le support 110 du cache mobile, muni d'une ouverture 111 de dimensions suffisantes pour que la source de lumière 112 puisse éclairer les photorécepteurs 1, 2 au travers des parties transparentes dudit cache.

Le support 110 est rendu solidaire de l'extrémité intérieure au boîtier de la tige mobile 105. La forme extérieure dudit support est celle d'un parallélipipède dont les faces perpendiculaires au plan de la figure 4 sont en contact glissant, par l'intermédiaire d'un film gras, avec les deux parois également planes et parallèles 102, 103 de l'évidement 104, ceci de manière à éviter toute rotation du cache mobile 109 autour de l'axe y'y de la tige mobile (une seule face du support 110 qui serait en contact avec l'une des deux parois 102, 103 pourrait suffire à cet effet).

Le ressort à compression 113 servant à maintenir la touche de contact 106 en pression sur la surface à contrôler s'appuie d'un côté, sur le corps 120 et du côté opposé, sur le support 110 du cache mobile.

Le support 114 perpendiculaire au plan de la figure 5 comprend la source de lumière 112 et son circuit d'alimentation électrique associé de type hybride. La source 112 est une diode électro-luminescente ou une lampe à incandescence.

Le support 115 perpendiculaire au plan de la figure 5, de l'ensemble électronique "récepteur" comprend, d'une part les deux photorécepteurs 1, 2 dont les surfaces sensibles sont délimitées par un contour de forme carrée ou rectangulaire en étant très voisines l'une de l'autre, la limite inférieure de l'intervalle les séparant étant de l'ordre du dixième de millimètre, et d'autre part les divers composants électroniques sur circuit hybride nécessaires pour le traitement de l'information. Les photorécepteurs peuvent être des photodiodes ou des phototransistors.

Le capteur est placé entre deux coquilles 121 et 122 ayant la forme de parallélipipèdes creux, le creux étant ovoïde . Le rebord de ces coquilles est creusé de deux entailles demi-cylindriques, respectivement 123 et 125 pour la demi-coquille 121 et 124 et 126 pour la demi-coquille 122. Les deux entailles 123 et 125 de relativement grand diamètre emprisonnent entre elles le corps cylindrique 101 et les deux entailles 123 et 125 de diamètre plus réduit emprisonnent entre elles la sortie tubulaire 116.

L'intérieur du boîtier formé par les coquilles 121, 122 réunies ainsi que la partie 120 du corps 100 permettent le passage des conducteurs électriques de liaison entre les circuits émetteur récepteur et un boîtier séparé (non représenté) utilisable avec un ou plusieurs capteurs.

Pour l'utilisation du capteur selon l'invention, ledit boîtier séparé contient :
- d'une part, l'alimentation électrique basse tension continue et régulée, nécessaire au fonctionnement des circuits émetteur et résepteur ;
- d'autre part, soit un indicateur électrique à aiguille ou à affichage digital donnant la valeur précise d'un déplacement de la tige mobile 105 d'un capteur parmi "n" à l'aide d'un commutateur, soit un dispositif de commutation permettant de transmettre l'information d'un capteur parmi "n" à une centrale de commande électromécanique de déplacements ou d'arrêts de corps mobiles à partir de positions prédéterminées de la tige mobile dudit capteur.

La figure 6 représente une vue éclatée en perspective du capteur. On retrouve figurés séparément le corps 101-102, les coquilles 121 et 122, le support porte-source 114 et le support porte-photorécepteurs 115. Les numéros de référence des éléments de la figure 6 sont les mêmes que sur les figures 4 et 5.

Le cache 109 est du type représenté sur les figures 3A et 3B. Il comprend une plaque 1090 perforée par deux feneêtres rectangulaires 1091 et 1092 accollées par un sommet C et ayant des côtés en alignement. On voit sur la figure 3B que l'axe de la tige peut prendre une inclinaison maximale $\alpha_{max}$ dans laquelle un sommet 1093 du photorécepteur 1 est sur le côté vertical intérieur de la fenêtre 1091 et un sommet 1094 du photorécepteur 2 est sur ce même côté vertical.

Représenté par la figure 7, l'ensemble électronique, intégré au capteur, comprend le circuit émetteur 200 et le circuit récepteur 300 de types connus.

Le circuit émetteur 200 fonctionne avec une alimentation sous basse tension régulée extérieure non représentée et comprend une diode de Zener 201 en série avec une résistance 202. Le point commun à la diode 201 et à la résistance 202 est relié à la base d'un transistor 203. Dans le circuit de l'émetteur de ce transistor sont insérées une résistance à coéfficient de température négatif CTN 204 et une résistance 205 en pa-

rallèle l'une avec l'autre et dans le circuit de collecteur sont placées une diode électroluminescente 112 en série avec une résistance 206. Le circuit 200 est compensé en température grâce à la résistance à coéfficient de température négatif 204, la compensation étant telle que la température puisse varier de 0 à 50°C sans introduire de dérive en température du récepteur 300.

Le circuit récepteur 300 alimenté par la même alimentation basse tension régulée extérieure comprend entre deux lignes d'alimentation électrique 301 et 302 les principaux éléments suivants :

- les deux photorécepteurs 1 et 2 ;
- un ensemble constitué de deux résistances fixes 303, 304 et d'un potentiomètre 305 ;
- un amplificateur 306 dont l'entrée négative est reliée à l'électrode commune des deux photorécepteurs 1 et 2 et dont l'entrée positive est reliée au point milieu réglable du potentiomètre 305.

Le gain de l'amplificateur 306 est réglé au moyen du potentiomètre 307 monté entre l'entrée négative et la sortie de l'amplificateur.

La sortie du circuit récepteur peut être reliée extérieurement :

- soit à un indicateur électrique 308 à travers la résistance 309 lui-même relié à la masse, permettant de connaître la valeur des déplacements de la tige mobile du capteur ,
- soit à l'ensemble de commutation électronique susmentionné permettant la commande des déplacements ou arrêts de corps mobiles.

Bien entendu, l'invention ne se limite pas aux exemples dé-

12

crits et représentés de forme de réalisation ; elle est
susceptible de nombreuses variantes réalisables par l'homme
de l'art sans qu'on s'écarte pour cela de son domaine. Par
exemple, un montage "non parfaitement symétrique" des surfaces sensibles des photorécepteurs par rapport à l'axe de
la tige mobile, ainsi qu'un positionnement seulement "approché" de celui indiqué pour le centre de symétrie
desdites surfaces sensibles, qui permettraient d'obtenir
une correction non nulle, mais néanmoins négligeable de
l'effet du jeu mécanique latéral de la tige mobile, seraient
dépendants de la présente invention.

## Revendications du brevet

1 - Dispositif optoélectronique de mesure de dimension et de déplacements à haute précision comprenant un corps, une tige mobile de palpeur dont on veut mesurer les déplacements, ladite tige coulissant dans ledit corps grâce à deux paliers portés par celui-ci, une touche de contact à l'extrémité de la tige, une source de lumière et deux photorécepteurs contigus positionnés symétriquement de part et d'autre de la tige, un cache porté par ladite tige mobile et situé entre la source et les photorécepteurs et ayant des parties transparentes et opaques, le mouvement du cache ayant pour effet d'augmenter et de diminuer respectivement les surfaces sensibles exposées à la source de lumière des deux photorécepteurs, caractérisé en ce que ledit cache est substantiellement symétrique de la touche de contact à l'extrémité de la tige par rapport au point milieu entre les deux paliers, d'où il résulte que le jeu mécanique de la tige dans ses paliers de guidage n'entraine qu'une variation nulle ou négligeable de la différence des éclairements des photorécepteurs.

2 - Dispositif optoélectronique de mesure de dimensions et de déplacements conforme à la revendication 1, caractérisé en ce que les photorécepteurs ont la forme d'un rectangle et que les côtés contigus de ces rectangles sont parallèles à l'axe de déplacement de la tige.

3 - Dispositif optoélectronique de mesure de dimensions et de déplacements conforme à la revendication 2, caractérisé en ce que les côtés contigus des rectangles sont espacés d'une quantité de l'ordre d'un ou quelques dixièmes de millimètres.

4 - Dispositif optoélectronique de mesure de dimensions et de déplacements conforme à la revendication 1, caractérisé en ce qu'il comprend, dans le corps, deux plaques parallèles formant glissière et, à l'extrémité de la tige mobile opposée à celle portant la touche de contact, une pièce coulissant dans ladite glissière et percée d'un trou de forme oblongue ; ledit trou laissant passer la lumière de la source de lumière aux photorécepteurs et portant le cache mobile.

5 - Dispositif optoélectronique de mesure de dimensions et de déplacements conforme à la revendication 4, caractérisé en ce que la pièce coulissant dans la glissière porte le cache mobile dans le plan perpendiculaire à l'axe du trou de forme oblongue et contenant l'axe de la tige mobile.

6 - Dispositif optoélectronique de mesure de dimensions et de déplacements conforme aux revendications 1 et 2, caractérisé en ce que le cache est formé d'une plaque comprenant deux fenêtres rectangulaires opposées par un sommet et de deux parties opaques rectangulaires opposées par le sommet, que les côtés des rectangles du cache sont parallèles aux côtés des photorécepteurs et qu'un côté délimitant les deux fenêtres rectangulaires est projeté par la source de lumière entre les deux côtés contigus des photorécepteurs rectangulaires.

7 - Dispositif optoélectronique de mesure de dimensions et de déplacements conforme à la revendication 4 caractérisé en ce que les deux plaques parallèles formant glissières sont réunies par deux pièces transversales haut et bas délimitant un logement, dans laquelle se débat la pièce coulissant reliée à la tige, que la source de lumière est monté sur une plaque fermant d'un côté ledit logement et que les photorécepteurs sont montés sur une plaque fermant de l'autre côté ledit logement.

8 - Dispositif optoélectronique de mesure de dimensions et de déplacements conforme à la revendication 7, caractérisé en ce qu'il comprend un ressort logé entre la pièce transversale haute du logement et le côté transverse haut de la pièce coulissant et sollicitant la tige mobile vers l'extérieur du dispositif.

9 - Dispositif optoélectronique de mesure de dimensions et de déplacements conforme à la revendication 1, caractérisé en ce que la partie du corps associée à l'ensemble optoélectronique du dispositif est comprise entre deux pièces vissées l'une à l'autre.

10 - Dispositif optoélectronique de mesure de dimensions et de déplacements conforme à la revendication 9, caractérisé en ce que lesdites pièces vissées l'une à l'autre sont des demi-coquilles.

11 - Dispositif optoélectronique de mesure de dimensions et de déplacements conforme aux revendications 1, 9 et 10, caractérisé en ce que le corps comporte un tube débouchant dans la chambre comprise entre les deux demi-coquilles assemblées pour y appliquer une dépression destinée au relèvement de la tige contre l'action du ressort.

12 - Dispositif optoélectronique de mesure de dimensions et de déplacements conforme aux revendications 9, 10 et 11, caractérisé en ce que les demi-coquilles comprennent des échancrures semi-cylindriques pour enserrer le corps à l'endroit du tube d'évacuation et à l'endroit d'un palier de la tige mobile, ainsi que pour la passage des fils électriques reliés aux circuits électroniques émetteur et récepteur de lumière.

001049ʓ

## FIG.1A

## FIG.1B

## FIG.1C

# FIG.2A

# FIG.2B

2/5

0010493

001049ε

# FIG.3A

# FIG.3B

# FIG.7

FIG.4

125
121
123
120
116
113
104
111
103
102
109
C
101
105
106

126
122
124

FIG.5

126
122
120
115
110
111
1,2
112
109
114
124
105
101
106

001049ᴣ

# FIG.6

| CLASSEMENT DE LA DEMANDE (Int. Cl. ) | | |
|---|---|---|

## DOCUMENTS CONSIDERES COMME PERTINENTS

| Catégorie | Citation du document avec indication, en cas de besoin, des parties pertinentes | Revendication concernee |
|---|---|---|
| | GB - A - 1 277 099 (THE RANK ORGANIZATION)<br><br>* Titre; page 2, lignes 27-61, 93-116; figures 1,2,3,5 *<br><br>-- | 1,2,6 |
| | US - A - 3 590 261 (R.K. SNOOK et al.)<br><br>* Titre; colonne 4, lignes 41-56; colonne 5, lignes 66-75; colonne 7, lignes 48-66; figures 2,3,4,6,7,9,10 *<br><br>-- | 4,5,7 |
| A | DE - B - 1 253 796 (FUJIO SUGANUMA)<br><br>* Titre; colonne 3, ligne 5 - colonne 4, ligne 8; figures 1,2,4 *<br><br>---- | 1 |

**CLASSEMENT DE LA DEMANDE (Int. Cl. )**

G 01 B 11/00
     21/00
G 01 D 5/34

**DOMAINES TECHNIQUES RECHERCHES (Int. Cl. )**

G 01 B 11/00
     21/00
     19/34
G 01 D 5/34
     5/32

**CATEGORIE DES DOCUMENTS CITES**

X particulièrement pertinent
A: arriere-plan technologique
O. divulgation non-écrite
P: document intercalaire
T: theorie ou principe à la base de l'invention
E: demande faisant interférence
D: document cité dans la demande
L: document cité pour d'autres raisons

&: membre de la même famille, document correspondant

Le present rapport de recherche a été établi pour toutes les revendications

| Lieu de la recherche | Date d'achevement de la recherche | Examinateur |
|---|---|---|
| La Haye | 18-01-1980 | VISSER |

OEB Form 1503.1 06.78